# EUROPEAN PATENT APPLICATION

(11) **EP 4 830 820 A1**
(43) Date of publication of application: **28.10.2026**
(21) Application number: 24908010.2
(22) Date of filing: 17.12.2024
(51) Int. Cl.: B01D 61/52, B01D 61/46, B01D 61/42, C02F 1/469

(54) **ION EXCHANGE STACK ASSEMBLY AND METHOD FOR OPERATING SAME**

(30) Priority: 18.12.2023 KR 20230185043
(71) Applicant: POSCO Holdings Inc., Pohang-si, Gyeongsangbuk-do 37859 (KR)
(72) Inventor: KANG, Chanhyeok, Pohang-si, Gyeongsangbuk-do 37859 (KR); CHOI, Jaehyug, Pohang-si, Gyeongsangbuk-do 37859 (KR); KIM, Hye Jeong, Pohang-si, Gyeongsangbuk-do 37859 (KR); KIM, Kyunghoon, Pohang-si, Gyeongsangbuk-do 37859 (KR); LEE, Sihwa, Pohang-si, Gyeongsangbuk-do 37859 (KR); MYEONG, Wan Jae, Pohang-si, Gyeongsangbuk-do 37859 (KR)
(74) Representative: Pfenning, Meinig & Partner mbB
(86) International application number: PCT/KR2024/020492
(87) International publication number: WO 2025/135727

(57) **Abstract**

The present invention relates to an ion exchange stack assembly and a method for operating the same, and provides an ion exchange stack assembly comprising: an ion exchange membrane having an injection hole formed in at least one of one end and the other end thereof; a gasket positioned on one surface or both surfaces of the ion exchange membrane; and a housing supporting the ion exchange membrane and the gasket, wherein the ion exchange stack is positioned in plurality in parallel, and ion exchange membranes in the plurality of ion exchange stacks are connected to one another through a flow path.

## Description

### [TECHNICAL FIELD]

The present invention relates to an ion exchange stack assembly and a method for operating the same.

### [BACKGROUND ART]

An ion exchange stack assembly includes an ion exchange stack composed of a housing, an ion exchange membrane, and a gasket, and external facilities suitable therefor, such as a press, electrode plates, and piping.

Conventionally, mass-production dimensions of an ion exchange membrane have been limited, and accordingly the total processing capacity of an ion exchange stack assembly has been limited.

Recently, as electrodialysis devices and the like have begun to be used in the field of lithium recovery and the like, an issue of processing capacity has arisen. However, due to limitations in the size of ion exchange membranes, it is difficult to actually enlarge equipment.

### [DETAILED DESCRIPTION OF THE INVENTION]

### [Technical Problem]

The present invention is intended to expand the total processing capacity of a single ion exchange stack assembly without changing an ion exchange membrane, which is a limiting condition among components of an ion exchange stack, and to solve problems that may secondarily occur.

### [Technical Solution]

In one embodiment of the present invention, there is provided an ion exchange stack assembly, comprising: an ion exchange membrane having an injection hole formed in at least one of one end and the other end thereof; a gasket positioned on one surface or both surfaces of the ion exchange membrane; and a housing supporting the ion exchange membrane and the gasket, wherein the ion exchange stack is positioned in plurality in parallel, and ion exchange membranes in the plurality of ion exchange stacks are connected to one another through a flow path.

The flow path may be positioned in plurality in a height direction of the ion exchange membrane.

The plurality of flow paths may be positioned respectively at an upper end and a lower end of the ion exchange membrane.

When a height of the ion exchange membrane is 100 length%, a passage height of each flow path may be 0.8 to 16.5 height%.

A ratio of a width to the height of the ion exchange membrane may be 20 to 40 length%.

The flow path may be streamlined in a rotational flow direction of a solution.

The plurality of ion exchange stacks may have the same area as one another.

In another embodiment of the present invention, there is provided a method for operating an ion exchange stack assembly, comprising: preparing an ion exchange stack including a plurality of ion exchange membranes and gaskets positioned therebetween, and including a treatment solution part, a concentration part, and a dilution part configured therefrom; and connecting a plurality of the ion exchange stacks in parallel, wherein, in the plurality of connected ion exchange stacks, each treatment solution part, concentration part, and dilution part are connected to one another through a flow path, and a concentration of a solution in each stack is uniformly controlled through the flow path.

The flow path may connect the treatment solution part, the concentration part, and the dilution part in each ion exchange stack, respectively, and may connect the same through a plurality of flow paths at an upper end and a lower end of the stack.

When a height of the ion exchange membrane is 100 length%, a passage height of each flow path may be 0.8 to 16.5 height%.

### [Advantageous Effects]

A performance target in an ion exchange stack assembly can be improved without changing an ion exchange membrane, of which dimensional enlargement is not easy.

Costs required for manufacture, installation, and construction of the ion exchange stack assembly can be reduced.

Without using separate power and energy, performance deviation between ion exchange stacks can be corrected, thereby improving the lifespan of each ion exchange stack.

### [BRIEF DESCRIPTION OF THE DRAWINGS]

FIG. 1 is a schematic view of a detailed device of an ion exchange stack.
FIG. 2 is a schematic view of an assembly in which a plurality of stacks are present with respect to portion A of FIG. 1.
FIG. 3 is a cross-sectional view from a side of FIG. 2.
FIG. 4 is a conceptual view of a plurality of ion exchange stack assemblies according to an embodiment of the present invention.
FIG. 5 shows evaluation results of ion uniformity in each stack according to a passage height of a flow path.

### [BEST MODE FOR CARRYING OUT THE INVENTION]

Hereinafter, embodiments of the present invention will be described in detail. However, these are provided as examples, and the present invention is not limited thereto, and the present invention is only defined by the scope of the claims to be described below.

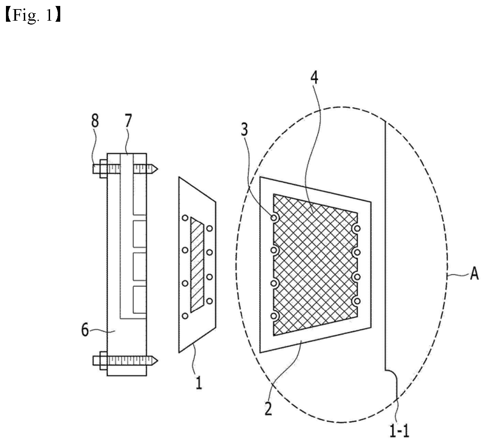

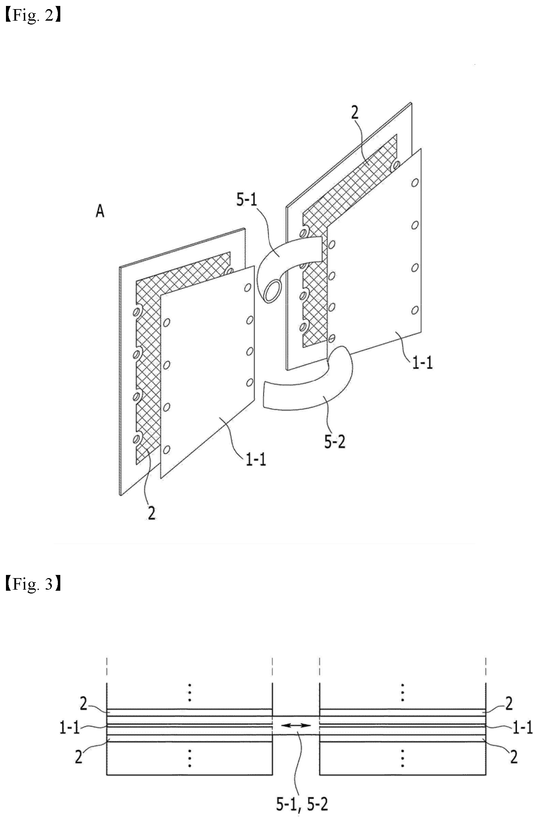

In the present invention, an ion exchange stack structure using two or more ion exchange membranes (1, 1-1) and gaskets (2) at the same time was devised by using a housing designed as shown in FIGS. 1 to 4.

In addition, in order to prevent ion imbalance caused by differences in performance of ion exchange membranes in each ion exchange stack, an ion exchange passage was secured in the housing so that circulation occurs due to a buoyancy difference. Through such a design change, an ion exchange region of a single ion exchange stack can be expanded two or more times.

Specifically, in one embodiment of the present invention, there is provided an ion exchange stack assembly, comprising: an ion exchange membrane (1, 1-1) having an injection hole (3) formed in at least one of one end and the other end thereof; a gasket (2) positioned on one surface or both surfaces of the ion exchange membrane (1, 1-1); and a housing (not shown) supporting the ion exchange membrane (1, 1-1) and the gasket (2), wherein the ion exchange stack is positioned in plurality in parallel, and ion exchange membranes in the plurality of ion exchange stacks are connected to one another through flow paths (5-1, 5-2).

As described above, through the flow paths (5-1, 5-2) installed in the housing, chambers (solution chambers) in which the respective ion exchange membranes (1, 1-1) are present can be connected to one another. Since performance of the plurality of stacks cannot be identical, a difference occurs in voltages applied to both ends due thereto. Such a voltage difference eventually causes heat generation due to overvoltage, and such heat generation may cause a fatal problem in the lifespan of the ion exchange membrane.

Accordingly, it is important to uniformly adjust the concentration of the solution inside the stack so that the respective membranes can be under similar conditions.

The flow paths (5-1, 5-2) may be positioned in plurality in a height direction of the ion exchange membranes (1, 1-1). The plurality of flow paths (5-1, 5-2) may be positioned respectively at an upper end and a lower end of the ion exchange membranes (1, 1-1).

Specifically, it is preferable that the flow paths are positioned at both ends of an inlet portion and an outlet portion of the solution. In this case, uniformity of the solution in the solution chamber can be effectively improved by physical phenomena such as convection and floating.

When a height of the ion exchange membranes (1, 1-1) is 100 length%, a passage height of each of the flow paths (5-1, 5-2) may be 0.8 to 16.5 height%. This range is a range obtained while operating an assembly designed by the present inventors, and shows that uniformity of the solution does not continuously increase even if an actual cross-sectional area of the flow paths (5-1, 5-2) infinitely increases. Specific experimental data therefor will be described below.

For a specific example, when a height of the stack is 1220 mm, a height range of the ion exchange passage may be about 10 mm to 200 mm.

A ratio of a width to the height of the ion exchange membranes (1, 1-1) may be 20 to 40 length%. This may vary depending on design of the ion exchange membrane.

The flow paths (5-1, 5-2) may be streamlined in a rotational flow direction of the solution. This may vary depending on design of the housing. The flow paths may be appropriately changed as long as they have a structure facilitating movement of the solution.

The plurality of ion exchange stacks may have the same area as one another. Basically, the assembly may be designed by assuming that a plurality of stacks under the same conditions are used in parallel. This may have advantages in terms of overall throughput and stability of the device.

In another embodiment of the present invention, there is provided a method for operating an ion exchange stack assembly, comprising: preparing an ion exchange stack including a plurality of ion exchange membranes and gaskets positioned therebetween, and including a treatment solution part, a concentration part, and a dilution part configured therefrom; and connecting a plurality of the ion exchange stacks in parallel, wherein, in the plurality of connected ion exchange stacks, each treatment solution part, concentration part, and dilution part are connected to one another through a flow path, and a concentration of a solution in each stack is uniformly controlled through the flow path.

The flow path may connect the treatment solution part, the concentration part, and the dilution part in each ion exchange stack, respectively, and may connect the same through a plurality of flow paths at an upper end and a lower end of the stack.

When a height of the ion exchange membrane is 100 length%, a passage height of each flow path may be 0.8 to 16.5 height%.

### [MODE FOR CARRYING OUT THE INVENTION]

Hereinafter, preferred Examples and Comparative Examples of the present invention will be described. However, the following Examples are merely preferred embodiments of the present invention, and the present invention is not limited to the following Examples.

### Example

Bipolar electrodialysis was performed under the following solution and operating conditions.

As the solution, lithium hydroxide at 0.0001 mol/L was used.

At this time, the BASE solution is composed at a ratio of Li⁺ and OH⁻ 95% / impurities such as SO₄²⁻ and Na⁺ 5%; however, in the present Example, the experiment was performed with 100% lithium hydroxide after removing 5% impurities.

The stack configuration was designed as a three-chamber BPED process of ACID-BASE-SALT, and the solution passage in the feed frame housing was filled with the BASE solution.

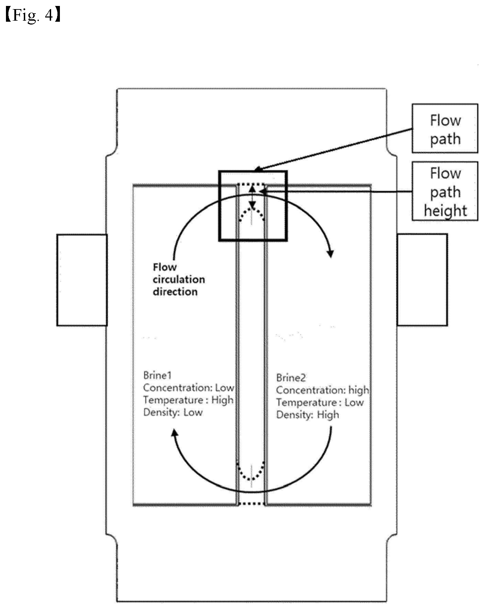

At this time, the following velocity, pressure, temperature, and concentration were configured in consideration of the average of each region of FIG. 4.

Sur_left and Sur_right indicate the left ion exchange region and the right ion exchange region based on FIG. 4. This is a designation and does not mean an ion exchange passage.

When power was applied to the BPED system in a state in which the initial stack sur_left had a relative concentration of 0 and sur_right had a concentration of 0.0001 M, heat of 100 W generated as a salt acted as resistance was applied to each chamber.

Buoyancy is generated due to a density difference caused by a temperature difference of the solution and a concentration difference of concentration ions, and circulation occurs through the flow path.

When a height of the ion exchange membrane was 100 length%, a passage height of each flow path was changed as shown in the table below, and respective numerical values were measured.

**[Table 1]**

| 0.008 | Velocity magnitude (m/s) | Pressure (Pa) | Temperature (K) | Concentration (mol/m^3) |
|---|---|---|---|---|
| Sur_Left | 5.43E-08 | 169.06 | 304.61 | 0.086387 |
| Sur_Right | 5.34E-08 | 169.29 | 294.59 | 0.11697 |
| | | | | |

| 0.04 | Velocity magnitude (m/s) | Pressure (Pa) | Temperature (K) | Concentration (mol/m^3) |
|---|---|---|---|---|
| Sur_Left | 7.41E-08 | 163.06 | 303.61 | 0.089083 |
| Sur_Right | 7.33E-08 | 163.22 | 295.92 | 0.11446 |
| | | | | |

| 0.08 | Velocity magnitude (m/s) | Pressure (Pa) | Temperature (K) | Concentration (mol/m^3) |
|---|---|---|---|---|
| Sur_Left | 7.52E-08 | 153.87 | 303.12 | 0.090014 |
| Sur_Right | 7.45E-08 | 153.96 | 296.8 | 0.11406 |
| | | | | |

| 0.16 | Velocity magnitude (m/s) | Pressure (Pa) | Temperature (K) | Concentration (mol/m^3) |
|---|---|---|---|---|
| Sur_Left | 6.57E-08 | 132.35 | 302.71 | 0.090692 |
| Sur_Right | 6.53E-08 | 132.38 | 298.05 | 0.11512 |

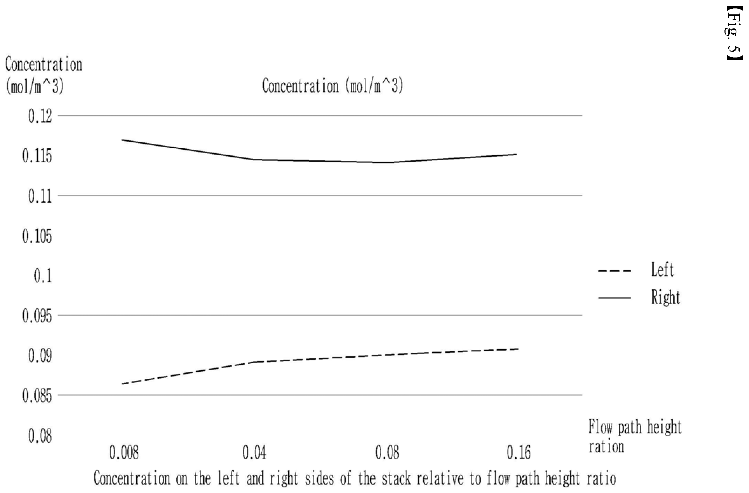

The results are also shown in FIG. 5.

When a height of the ion exchange membrane was 100 length%, it was found that, as a passage height ratio of each flow path increased, the difference in average concentration between the left and right sides of the ion exchange area decreased and then increased again in the 0.16 section.

The present invention is not limited to the above Examples and may be manufactured in various different forms. A person having ordinary skill in the art to which the present invention pertains will understand that the present invention may be embodied in other specific forms without changing the technical spirit or essential features of the present invention. Therefore, the above-described Examples should be understood as illustrative in all respects and not restrictive.

### [Description of Reference Numerals]

1, 1-1: ion exchange membrane
2: gasket
3: injection hole
4: spacer
5-1, 5-2: flow path
6: end plate
7: inlet
8: screw

## Claims

1. An ion exchange stack assembly, comprising:
an ion exchange membrane having an injection hole formed in at least one of one end and the other end thereof;
a gasket positioned on one surface or both surfaces of the ion exchange membrane; and
a housing supporting the ion exchange membrane and the gasket,
wherein the ion exchange stack is positioned in plurality in parallel, and
wherein ion exchange membranes in the plurality of ion exchange stacks are connected to one another through a flow path.

2. The ion exchange stack assembly of claim 1,
wherein the flow path is positioned in plurality in a height direction of the ion exchange membrane.

3. The ion exchange stack assembly of claim 2,
wherein the plurality of flow paths are positioned respectively at an upper end and a lower end of the ion exchange membrane.

4. The ion exchange stack assembly of claim 3,
wherein, when a height of the ion exchange membrane is 100 length%, a passage height of each flow path is 0.8 to 16.5 height%.

5. The ion exchange stack assembly of claim 4,
wherein a ratio of a width to the height of the ion exchange membrane is 20 to 40 length%.

6. The ion exchange stack assembly of claim 5,
wherein the flow path is streamlined in a rotational flow direction of a solution.

7. The ion exchange stack assembly of claim 6,
wherein the plurality of ion exchange stacks have the same area as one another.

8. A method for operating an ion exchange stack assembly, comprising:
preparing an ion exchange stack including a plurality of ion exchange membranes and gaskets positioned therebetween, and including a treatment solution part, a concentration part, and a dilution part configured therefrom; and
connecting a plurality of the ion exchange stacks in parallel,
wherein, in the plurality of connected ion exchange stacks, each treatment solution part, concentration part, and dilution part are connected to one another through a flow path, and
wherein a concentration of a solution in each stack is uniformly controlled through the flow path.

9. The method for operating an ion exchange stack assembly of claim 8,
wherein the flow path connects the treatment solution part, the concentration part, and the dilution part in each ion exchange stack, respectively, through a plurality of flow paths at an upper end and a lower end of the stack.

10. The method for operating an ion exchange assembly of claim 8,
wherein, when a height of the ion exchange membrane is 100 length%, a passage height of each flow path is 0.8 to 16.5 height%.
